Europäisches Patentamt

European Patent Office

Office européen des brevets

(19)

(11) **EP 0 831 580 B1**

## (12) EUROPÄISCHE PATENTSCHRIFT

(45) Veröffentlichungstag und Bekanntmachung des Hinweises auf die Patenterteilung:
**19.02.2003 Patentblatt 2003/08**

(51) Int Cl.$^7$: **H02P 6/14**, H02P 6/16

(21) Anmeldenummer: **97115143.6**

(22) Anmeldetag: **02.09.1997**

(54) **Einrichtung zur Antriebsstromsteuerung eines elektrisch kommutierten Permanentmagnet-Motors**

Current controlled drive device for electric commutated permanent magnet motors

Dispositif d'entraînement à commande de courant pour moteurs à aimant permanent commutés électriquement

(84) Benannte Vertragsstaaten:
**DE ES FR GB IT**

(30) Priorität: **21.09.1996 DE 19638833**

(43) Veröffentlichungstag der Anmeldung:
**25.03.1998 Patentblatt 1998/13**

(73) Patentinhaber: **Diehl AKO Stiftung & Co. KG 88239 Wangen im Allgäu (DE)**

(72) Erfinder: **Zeh, Stefan, Dipl.-Ing. 88299 Leutkirch (DE)**

(74) Vertreter: **Hofmann, Gerhard, Dipl.-Ing. Patentassessor Stephanstrasse 49 90478 Nürnberg (DE)**

(56) Entgegenhaltungen:
EP-A- 0 301 366          WO-A-94/07301
WO-A-96/01521          DE-C- 4 040 926
DE-C- 4 310 260          US-A- 4 169 990
US-A- 5 534 763

- NANDAKUMAR V N ET AL: "A NOVEL FIELD ORIENTATION SCHEME FOR SEPARATELY EXCITED SYNCHRONOUS MOTOR EMPLOYING A SLOTTED DISC SENSOR" PROCEEDINGS OF THE ANNUAL APPLIED POWER ELECTRONICS CONFERENCE AND EXPOSITION (APEC), ORLANDO, FEB. 13 - 17, 1994, Bd. VOL. 1, Nr. CONF. 9, 13. Februar 1994, Seiten 370-374, XP000467340 INSTITUTE OF ELECTRICAL AND ELECTRONICS ENGINEERS
- BABICO J: "3-PHASE BRUSHLESS DC MOTOR USING A SINGLE SENSOR" MOTOROLA TECHNICAL DEVELOPMENTS, Bd. 9, August 1989, Seite 56/57 XP000053786

**Beschreibung**

Die Erfindung betrifft eine Einrichtung zur Antriebsstromsteuerung, insbesondere Drehzahlsteuerung, eines elektrisch kommutierten Permanentmagnet-Synchronmotors mit n-Wicklungssträngen und n-Sensoren, insbesondere Hallsensoren, zur Drehwinkelerkennung des Rotors des Motors, wobei eine Steuerelektronik die Sensorsignale erfaßt und Ausgangssignale zur Ansteuerung von Leistungshalbleitern erzeugt, die den durch die Wicklungsstränge fließenden Motorstrom steuern.

Eine derartige Einrichtung ist in der DE 40 40 926 C1 gezeigt. Auf die Wicklungen des Synchronmotors werden Spannungsblöcke (Blocksteuerung) geschaltet. Dabei werden die Sensorsignale in um 120°el (elektrisch) versetzte und sich nicht überlappende Ausgangssignale umgeformt. Um Kommutierungsgeräusche zu reduzieren, werden die Spannungsblöcke während der Kommutierung durch analoge Differenzbildner beeinflußt. Diese Einrichtung bringt bei Antrieben mit vergleichsweise hohen Drehmomenten bei langsamen Drehzahlen, beispielsweise bei Waschmaschinenantrieben, keine ausreichende Geräuschreduzierung.

In der DE 43 10 260 C1 ist eine elektronische Steuervorrichtung für einen elektronisch kommutierten Gleichstrommotor vorgeschlagen. Im oberen Drehzahlbereich herrscht die Blocksteuerung vor, um den Wirkungsgrad gegenüber einer reinen Linearsteuerung zu verbessern. Im unteren Drehzahlbereich dominiert die Linearsteuerung, um starke Stromüberhöhungen und damit eine erhöhte Geräuschentwicklung zu verhindern. Die Blockform der Spannungen wird jedoch beibehalten, was prinzipbedingte Geräusche mit sich bringt.

Ein elektrisch kommutierter Motor ist auch aus der US 4 169 990 bekannt. Zur Messung der Rotorlage sind drei schaltende Hallsensoren vorgesehen. Die Motorklemmen werden entsprechend den Signalen der Hallsensoren alle 60° el auf ein neues Potential geschaltet, so daß der Stromraumzeiger jeweils um 60° el springt. Die Amplitude der Spannungsblöcke wird über eine Pulsweitenmodulation oder über eine variable Zwischenkreisspannung gesteuert. Der Motor nach der US 4 169 990 ist so konstruiert, daß er eine möglichst rekkeckförmige EMK aufweist. Da der Motorstrom nicht schlagartig von einem Strang auf den anderen Strang (Wicklung) kommutiert und er nicht so aufgebaut sein kann, daß die EMK ideal rechteckförmig ist, treten Kommutierungseinbrüche bzw. Drehmomenteinbrüche auf. Diese wirken sich nachteilig auf den Wirkungsgrad aus und verursachen lästige Geräusche. Darüber hinaus verstärken die schnellen Stromänderungsgeschwindigkeiten die Geräuschbildung. Besonders bei drehmomentstarken Antrieben, wie sie beispielsweise bei Waschmaschinen benötigt werden, ist ein solcher Motor wenig geeignet.

Ein Verfahren und eine Vorrichtung zur Regelung eines umrichtergespeisten permanentmagneterregten Synchronmotors ist auch in der WO 94/07 301 beschrieben. Diese Einrichtung erfordert aufwendige Rechenoperationen, Stromsensoren und empfindliche Rotorlagesensoren. Ein derartiger Aufwand ist bei Elektrofahrzeugen, jedoch nicht bei Waschmaschinen, oder anderen Haushaltsgeräten tragbar.

Aufgabe der Erfindung ist es, eine Einrichtung der eingangs genannten Art vorzuschlagen, die bei geringen baulichen Sensoraufwand zu einem geräuscharmen Antrieb mit hohem Wirkungsgrad führt, auch wenn eine große Spreizung der Drehzahl vorgesehen ist.

Erfindungsgemäß ist obige Aufgabe durch den Anspruch 1 gelöst.

Der Motor ist so aufgebaut, daß er von seiner Konstruktion her im wesentlichen sinusförmige induzierte Spannungen aufweist. Ein solcher Motoraufbau ist an sich üblich und hat gegenüber Motoren, die gezielt von der Sinusform abweichende, beispielsweise trapezförmige, induzierte Spannungen aufweisen, den Vorteil eines einfachen Aufbaus.

Sollte der Motor eine von der Sinusform abweichende EMK aufweisen, dann sollte die Umrichterausgangsspannung eine an die jeweilige Motor-EMK angepaßte Spannungsform aufweisen. Die vorliegende Erfindung kann durch geringfügige Modifikation im unten näher beschriebenen siebten Funktionsblock auf nichtsinusförmige Ausgangsspannungen abgeändert werden.

Für den Aufbau der Einrichtung ist es günstig, mit nur wenigen Sensoren, beispielsweise drei Hallsensoren, zur Drehwinkelerkennung zu arbeiten. Die Verwendung von wenigen Sensoren hat jedoch zur Folge, daß die Sensoren nur ein grobes Abbild der Rotorstellung geben. Beispielsweise wird durch drei Hallsensoren eine elektrische Umdrehung in nur sechs Sektoren aufgelöst. Um eine hohe Auflösung der Drehwinkelstellung zu erreichen, wird in jedem Sektor ein Zusatzsignal erzeugt, das von der jeweiligen Drehwinkelgeschwindigkeit im vorhergehenden Sektor abhängig ist. Aus dem Sektorsignal und dem Zusatzsignal werden pulsweitenmodulierte Ausgangssignale erzeugt, wobei die Pulsweite einer Sinusfunktion proportional ist. Es werden also die Leistungshalbleiter so geschaltet, daß sich im zeitlichen Mittel sinusförmige Ströme in den Wicklungssträngen ergeben, wobei die Sinusfrequenz die Drehzahl bzw. Drehwinkelgeschwindigkeit des Rotors bestimmt.

Durch diese sinusförmige Ansteuerung des Motors ist erreicht, daß praktisch keine Stromüberhöhungen entstehen und sich damit keine Kommutierungsgeräusche bzw. Drehmomentwelligkeiten ergeben. Da Kommutierungseinbrüche fehlen, können solche auch nicht zu Wirkungsgradverlusten führen. Durch die Einrichtung sind auch die magnetischen Materialien des Rotors wirkungsvoll ausgenutzt.

Ein mit der beschriebenen Einrichtung angesteuerter Motor ist beispielsweise ein Waschmaschinenmotor, der eine hohe Drehzahlspreizung zwischen der Waschdrehzahl und der Schleuderdrehzahl beherrschen muß und dabei große Anlaufmomente erzeugen muß. Die Einrichtung eignet sich für einen Waschmaschinenmotor, der die Wäschetrommel direkt - ohne Untersetzung - antreibt. Die Einrichtung kann auch für andere Motoren, beispielsweise bei Diskettenlaufwerken oder Videorekordern, verwendet werden.

Vorteilhafte Ausgestaltungen der Erfindung ergeben sich aus den Unteransprüchen und der folgenden Beschreibung. In der Zeichnung zeigen:

Figur 1 ein Blockschaltbild,

Figur 2 ein Signaldiagramm,

Figur 3 ein pulsweitenmoduliertes Ausgangssignal mit Sinusfunktion und

Figur 4 ein Motorzeigerdiagramm.

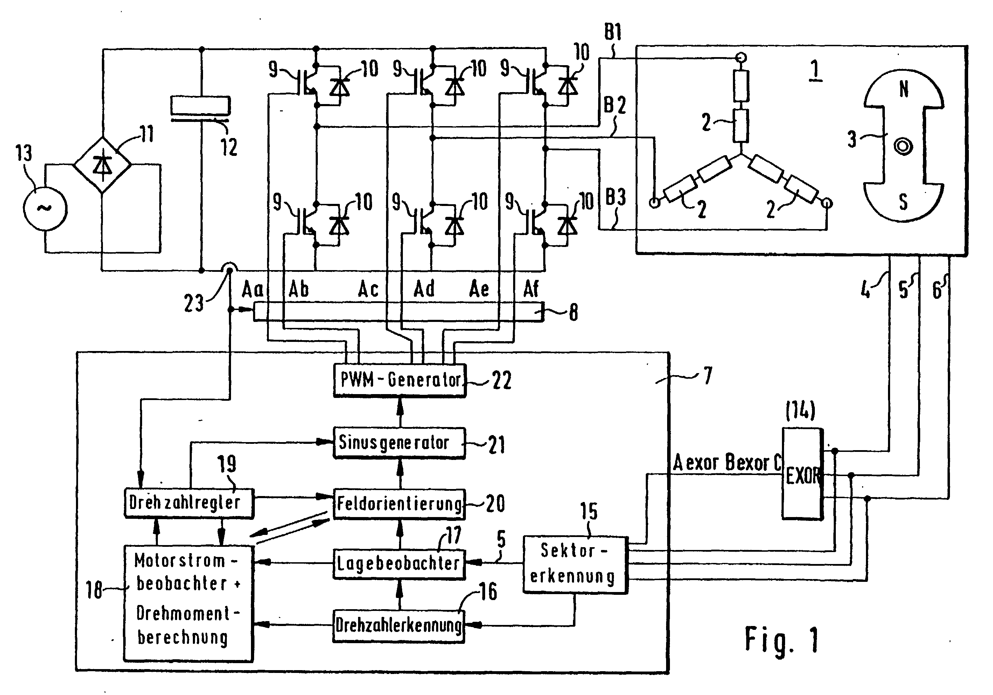

Ein elektronisch kommutierter Gleichstrommotor (EC-Motor) bzw. Permanentmagnet-Synchronmotor(1) weist drei im Stern geschaltete Wicklungsstränge(2) auf. Sein permanentmagnetischer Rotor(3) bildet ein oder vorzugsweise mehrere Polpaare. In Figur 1 und der folgenden Beschreibung wird zur Vereinfachung der Darstellung von einem Polpaar ausgegangen.

Der Motor(1) ist so aufgebaut, daß er sinusförmige induzierte Spannungen aufweist; d.h. wenn der Rotor(3) von außen an seiner Welle gedreht wird und die Wicklungsstränge(2) elektrisch freiliegen, treten an diesen induzierte sinusförmige Spannungen auf.

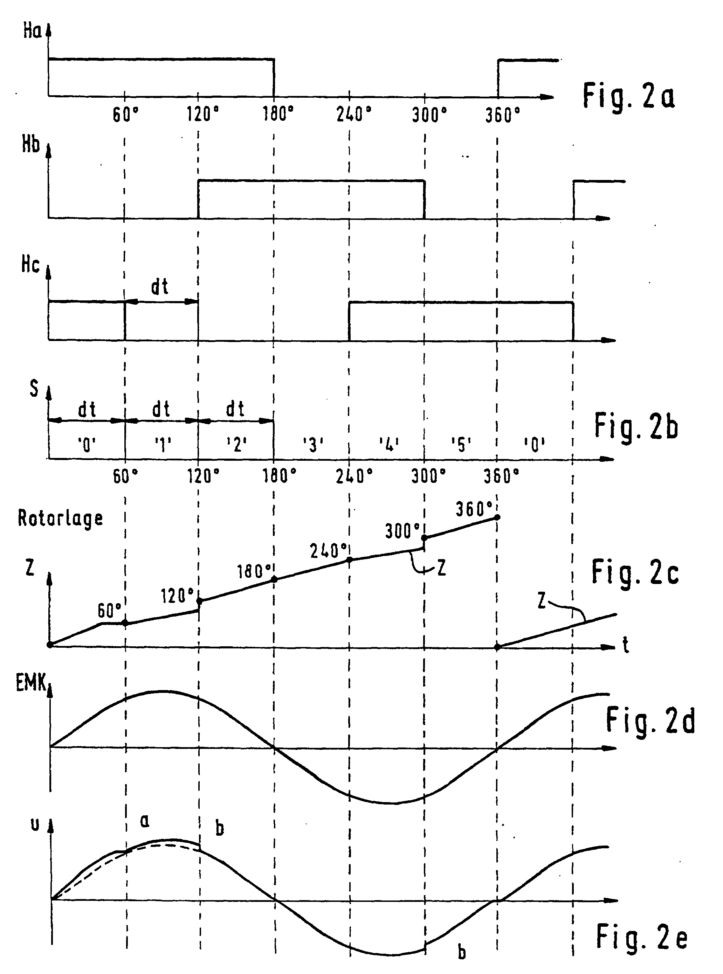

Dem Rotor(3) sind entsprechend den drei Wicklungssträngen(2) drei Hallsensoren(4,5,6) zugeordnet. Die Hallsensoren (4,5,6) sind so am Umfang des Rotors(3) angeordnet, daß an ihnen Sensorsignale(Ha, Hb,Hc) um jeweils 120° el (elektrisch) versetzt auftreten. Alle 60° el (elektrisch) ergibt sich eine Änderung (Flanke) der Sensorsignale(Ha,Hb,Hc). Dies ist in Figur 2a dargestellt.

Die Sensorsignale(Ha,Hb,Hc) sind an eine Steuerelektronik (7) gelegt, die Ausgangssignale(Aa bis Af) für eine Treiberschaltung(8) erzeugt. An die Treiberschaltung(8) sind sechs Leistungshalbleiter(9) angeschlossen, die als Schalter arbeiten. Je zwei Leistungshalbleiter sind jeweils einem der Wicklungsstränge(2) für positive und negative Halbwellen zugeordnet. Der Schaltstrecke jeder der Leistungshalbleiter (9) ist eine Freilaufdiode(10) parallelgeschaltet.

Die Leistungshalbleiter(9) bilden eine Brückenschaltung und liegen an einem Gleichrichter(11) und einem Kondensator(12). Der Gleichrichter(11) ist an das einphasige Haushalts-Wechselstromnetz(13) anschließbar.

Die Steuerelektronik(7), die mit einem Mikrocontroller arbeitet, dessen Software die Funktion der unten näher beschriebenen Funktionsblöcke übernimmt, erfaßt über ein Verknüpfungsgatter(14) die Änderungen der Sensorsignale und bildet daraus in einem Funktionsblock(15) das Sektorsignal(S) (vgl. Fig. 2b). Im Sektorsignal(S) ist die Information darüber enthalten, in welchem der sechs 60°-Sektoren "0" bis "5" sich der Rotor (3) jeweils befindet. Das sich nur alle 60° el ändernde Sensorsignal ist zu unscharf, um daraus Ausgangssignale(Aa bis Af) zu gewinnen, die im zeitlichen Mittel sinusförmige Ströme in den Wicklungssträngen(2) erzeugen sollen.

Um eine hohe Auflösung der jeweiligen Rotorlage zu erreichen, ermittelt die Steuerelektronik(7) ein Zusatzsignal(Z). In einem zweiten Funktionsblock(16) wird hierfür die jeweilige Zeitdifferenz(dt) zwischen den Flanken der Sensorsignale bzw. des Sektorsignals(S) erfaßt. Diese Zeitdifferenz(dt) ist umgekehrt proportional zur jeweiligen Drehwinkelgeschwindigkeit des Rotors(3) und damit zur Frequenz der jeweiligen Sinusschwingung der EMK des Motors(1). Figur 2d zeigt eine solche Sinusschwingung bezogen auf die sechs 60°-Sektoren "0" bis "5" des Sektorsignals(S).

In einem dritten Funktionsblock(17), mit dem die Funktionsblöcke(15,16) verbunden sind, wird als Zusatzsignal(Z) die genaue Rotorlage nach folgender Gleichung abgeschätzt:

$$Z = phi(t) = phi_o + omega \cdot (t - t_o)$$

wobei:

phi(t): Geschätzte Rotorposition zum interessierenden Zeitpunkt t,
$phi_o$: Rotorposition bei der letzten Hallflanke, welche zum Zeitpunkt $t_o$ auftrat,
omega: Rotorgeschwindigkeit, welche aufgrund der Daten im letzten Sektor ermittelt wurde.

Wie aus Figur 2b hervorgeht, sind aufgrund der Hallflanken nur diskrete Rotorlageinformationen vorhanden und zwar alle 60°el. Das Zusatzsignal(Z) liefert kontinuierliche Zwischenwerte(vgl. Fig.2c). Für das Zusatzsignal(Z) kann eine Auflösung von bis zu 1°el vorgesehen werden.

Ein vierter Funktionsblock(18), welcher Motorkenndaten in Tabellenform enthält, berechnet aufgrund der Informationen aus den Funktionsblöcken (16,17,19,20) die Amplitude und Phasenlage der Motorströme. Hier kann zusätzlich auch das aktuelle Motordrehmoment berechnet werden.

Ein fünfter Funktionsblock(19), welcher den Drehzahlregler beinhaltet, berechnet als Reglerstellgröße die Spannungsamplitude für die (drei) Ausgangsspannungen (B1 bzw. B2 bzw. B3). Der Drehzahlregler beruht auf einem Vergleich der Soll- und Istdrehzahlen und kann je nach Anwendungsfall verschiedene Reglerstrukturen aufweisen, wie z.B. PI-Regler, Zustandsregler, Fuzzy, Kennfeld etc. Die Solldrehzahl wird der Regeleinheit z.B. über eine serielle Schnittstelle oder über ein Potentiometer mitgeteilt.

Die Spannungsamplitude wird gegebenenfalls begrenzt, um eine Zerstörung des Antriebs, insbesondere der Leistungshalbleiter(9), durch Überstrom zu vermeiden.

Ein sechster Funktionsblock(20) erhält von dem dritten und vierten Funktionsblock(17,18) Informationen über die Rotorlage(Z) und über die Phasenverschiebung zwischen Motorstrom und Umrichterausgangsspannung(B1 bzw. B2 bzw. B3). Der Funktionsblock(20) berechnet daraus die Phasenlage für die Umrichterausgangsspannungen(B1 bzw. B2 bzw. B3). Diese Phasenlage ist so beschaffen, daß sich Motorströme einstellen, welche in Phase zu der EMK des Motors liegen (= feldorientiert).

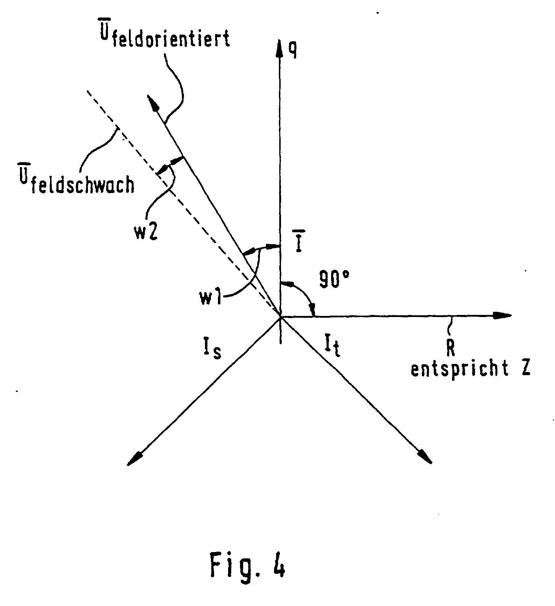

Bezogen auf das Motorzeigerdiagramm (vgl. Fig.4) wird zur Rotorlage(Z) 90° addiert, um die gewünschte Richtung des Stromraumzeigers zu erhalten. Der Phasenwinkel der zu stellenden Umrichterausgangsspannungen(B1,B2,B3) ergibt sich dadurch, daß zum Stromwinkel noch der Verschiebungswinkel (w1) zwischen Spannung und Strom dazuaddiert wird. Durch diese Feldorientierung befindet sich der Motor bei jeder Drehzahl in dem Arbeitspunkt mit optimalem Wirkungsgrad.

In einem siebten Funktionsblock(21) werden mit Hilfe einer Wertetabelle, die die Sinusfunktion - oder eine andere an den Verlauf der EMK des Synchronmotors angepaßte Funktion - beinhaltet, und der Spannungsphase aus dem Funktionsblock(20) und der Spannungsamplitude aus dem Funktionsblock(19) Ausgangsspannungs-Zahlenwerte generiert. Die so gewonnenen Zahlenwerte werden von einem PWM-Generator(22) pulsweitenmoduliert und zwar in der Weise, daß die Pulsweiten den Sinusfunktionen proportional sind. Es entstehen dann die Ausgangssignale(Aa bis Af).

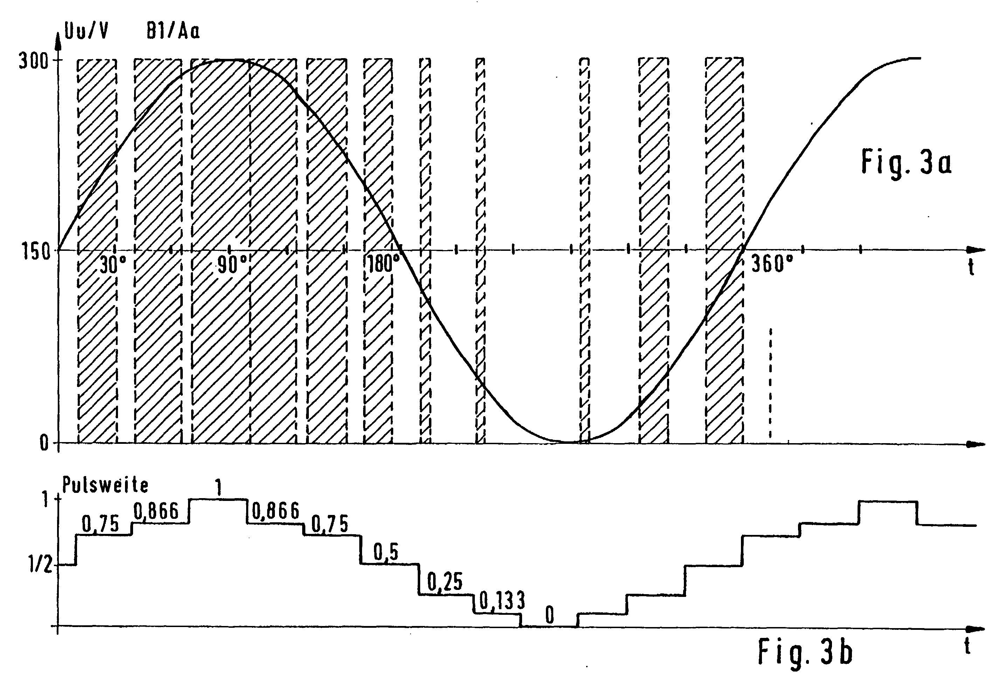

Figur 3a zeigt einen sinusförmigen Spannungsverlauf für eine der gewünschten Drehzahlen und strichliert eines der pulsweitenmodulierten Ausgangssignale(Aa) für eines der Leistungshalbleiterpaare bzw. eine der Umrichterausgangsspannungen(B1) für einen der Wicklungsstränge(2). Die Ausgangssignale für die anderen Wicklungsstränge sind entsprechend um 120° phasenverschoben. T zeigt die Periode der Pulsmodulation, wobei innerhalb dieser Periode der Puls zwischen 0% und 100% angenähert an die Sinusfunktion liegt. Figur 3b verdeutlicht dies. Es ist dabei hervorzuheben, daß die Figur 3 wegen der Darstellbarkeit vereinfacht ist. In der Praxis liegt die Frequenz der Sinusschwingung für das Waschen etwa zwischen 10 Hz und 20 Hz und für das Schleudern etwa zwischen 400 Hz und 450 Hz, wobei die Periode(T) der Pulsweitenmodulation beispielsweise $50 \times 10^{-6}$ s, entsprechend 20 kHz beträgt. In jedem Fall ist die Frequenz der Pulsweitenmodulation wenigstens um den Faktor 50 größer als die Frequenz der Sinusschwingung.

Durch die beschriebene Einrichtung werden auf die Wicklungsstränge(2) sinusförmige Spannungen gelegt. Dadurch sind Stromüberhöhungen und Kommutierungsgeräusche sowie den Wirkungsgrad beeinträchtigende Kommutierungseinbrüche vermieden. Figur 2e zeigt beispielsweise eine solche Spannung, die - zur Verdeutlichung - der Sinusform grob nachgeführt ist. Da das Zusatzsignal(Z) aus Funktionsblock(17) nicht immer der wirklichen Rotorlage entspricht, sind die Ausgangsspannungen nicht immer ideal sinusförmig. Zum Zeitpunkt der Hallflanken werden jedoch die Ausgangssignale korrigiert. An den Stellen a, b in Figur 2e sind solche Korrekturen zu sehen. Bis zur Stelle a war die Nachführung im Sektor "0" und "5" zu langsam, bis zur Stelle b war die Nachführung im Sektor "1" und "4" zu schnell.

Im Stromkreis der Leistungshalbleiter liegt ein Meßglied (23), das auf den Funktionsblock(8) wirkt. Bei einem etwa auftretenden Überstrom erfolgt über den Funktionsblock(8) eine Schnellabschaltung des Motors. Eine Abschaltung des Motors kann auch dadurch erreicht werden, daß die Motortemperatur, beispielsweise durch Erfassung der Temperatur an einem Kühlkörper der Leistungshalbleiter, erfaßt wird und bei einer hohen Grenztemperatur die Abschaltung vorgenommen wird.

Im feldorientierten Betrieb, wenn also im Zeigerdiagramm (vgl. Fig.4) der Stromzeiger(I) senkrecht zum Rotorflußzeiger(R) steht, ist die Drehzahlspreizung zu höheren Drehzahlen hin begrenzt. Um dennoch höhere Drehzahlen zu erreichen, wird im Feldschwächbetrieb gearbeitet, wobei dem jeweiligen Spannungswinkel (vgl. Fig.4) ein Vorhaltewinkel hinzu addiert wird. Dadurch stellt sich eine Blindstromkomponente ein, die das Rotorfeld schwächt und damit höhere Drehzahlen erlaubt. Im Feldschwächbetrieb gibt der Drehzahlregler (19) die Maximalspannungsamplitude aus. Für die Drehzahlregelung ist dann der beschriebene Vorhaltewinkel(w2) die Stellgröße. Im Funktionsblock(20) wird dieser Vorhaltewinkel bei der Berechnung der Spannungsphase zum Winkel für feldoriente Spannung hinzuaddiert.

Um zu vermeiden, daß beim Abbremsen mit geringem Drehmoment der Kondensator(12) überladen wird, liefert der Funktionsblock(19) wie bei der Feldschwächung einen Winkel(w2), welcher im Block(20) zum feldorientierten Spannungswinkel addiert wird. Dadurch entsteht im Motor ein nicht momentbildender Blindstrom. Dadurch arbeitet der Motor beim Bremsen als Generator mit schlechtem Wirkungsgrad und die generatorisch gewonnene Energie wird in den Wicklungssträngen(2) als Wärme abgebaut. Auf diese Weise lassen sich kleine Bremsmomente auch ohne eine Zwischenkreisentladeeinrichtung realisieren.

**Patentansprüche**

1. Einrichtung zur Antriebsstromsteuerung, insbesondere Drehzahlsteuerung, eines elektrisch kommutierten Permanentmagnet-Synchronmotors (1) mit n Wicklungssträngen und n Kommutierungssensoren, insbesondere Hallsensoren, zur Drehwinkelerkennung des Motor-Rotors (3), wobei eine Steuerelektronik (7) die Sensorsignale (H) erfaßt und Ausgangssignale (A) zur Ansteuerung von Leistungshalbleitern (9) hervorruft, über welche die Motorströme durch die Wicklungsstränge (2) fließen,
**dadurch gekennzeichnet,**
**daß** die Steuerelektronik (7) die Flanken der Sensorsignale (H) erfaßt und daraus ein Sektorsignal (S) darüber ermittelt, in welchem Drehwinkelsektor sich der Rotor (3) momentan befindet,
**daß** die Steuerelektronik (7) ferner aus der momentanen Drehwinkelgeschwindigkeit ein Zusatzsignal (Z) zur Interpolation der genauen Rotorstellung im momentanen Drehwinkelsektor abschätzt,
und **daß** schließlich die Steuerelektronik (7) aus einer für diesen Motor (1) abgespeicherten Wertetabelle, über den im wesentlichen sinusförmigen Verlauf seiner bei freiliegenden Wicklungssträngen (2) induzierten Spannungen (EMK-Funktionsblock 21), für das aktuelle Zusatzsignal (Z) im aktuellen Drehwinkelsektor Eingangswerte für einen Pulsbreiten-Generator (22) ausliest, der die Ausgangssignale (A) hervorruft, so daß deren Pulsbreite gemäß der EMK-Kurve diesen Motors (1) rotorstellungsabhängig kontinuierlich variiert.

2. Einrichtung nach Anspruch 1,
**dadurch gekennzeichnet,**
**daß** die Steuerelektronik (7) für die durch Sektorsignal (S) und Zusatzsignal (Z) gegebene aktuelle Rotorstellung einen Stromwinkel durch die Wicklungsstränge (2) einstellt, der um 90° zuzüglich der aktuellen Phasenverschiebung zwischen Strom und Spannung in den Wicklungssträngen (2) gegenüber der aktuellen Rotorstellung verschwenkt ist, so daß sich durch Phasengleichheit der Motorströme mit der Motor-EMK feldorientierter Betrieb einstellt.

3. Einrichtung nach Anspruch 1 oder 2,
**dadurch gekennzeichnet,**
**daß** die Steuerelektronik (7) die jeweilige Stromamplitude abschätzt und bei Übersteigen eines Grenzwertes die Stromamplitude und damit das Drehmoment begrenzt.

4. Einrichtung nach einem der vorhergehenden Ansprüche,
**dadurch gekennzeichnet,**
**daß** ein Meßglied (20) den tatsächlichen Motorstrom erfaßt und bei einem überstrom den Motor über die Steuerelektronik (7) abschaltet.

5. Einrichtung nach einem der vorhergehenden Ansprüche,
**dadurch gekennzeichnet,**
**daß** ein Temperaturfühler vorgesehen ist, der eine dem Motorstrom entsprechende Temperatur erfaßt und bei einer übertemperatur den Motor über die Steuerelektronik abschaltet.

6. Einrichtung nach einem der vorhergehenden Ansprüche,
**dadurch gekennzeichnet,**
**daß** die Steuerelektronik (7) zum Erreichen hoher Rotordrehzahlen zum ermittelten Spannungswinkel im Motorzeigerdiagramm einen Vorhaltewinkel addiert und dadurch einen feldschwächenden Blindstrom einstellt.

7. Einrichtung nach einem der vorhergehenden Ansprüche,
**dadurch gekennzeichnet,**
**daß** die Steuerelektronik (7) zum Abbremsen des Rotors (3) durch gezielte Einstellung eines Blindstroms den Wirkungsgrad des Motors bzw. Generators erniedrigt, um die kinetische Energie gezielt in Motorwärme wandeln zu können.

8. Einrichtung nach einem der vorhergehenden Ansprüche,
**dadurch gekennzeichnet,**
**daß** die Steuerelektronik (7) ein Mikrocontroller ist.

**Claims**

1. A device for controlling the driving current, in particular the speed, of an electrically commutated permanent-magnet synchronous motor (1) having n winding strands and n commutation sensors, in particular Hall sensors, for detecting the rotational angle of the motor's rotor (3), in which an electronic control mechanism (7) detects the sensor signals (H) and generates output signals (A) for controlling power semiconductors (9), by way of which the motor currents flow through the winding strands (2),
**characterized in that**
the electronic control mechanism (7) detects the edges of the sensor signals (H) and from them determines a sector signal (S) indicative of the angular sector in which the rotor (3) is instantaneously located,
**in that** the electronic control mechanism (7) also evaluates from the instantaneous angular speed an additional signal (Z) for interpolation of the precise position of the rotor in the instantaneous angular sector,
and **in that**, finally, from a value table stored for this motor (1), the electronic control mechanism (7) reads out by way of the substantially sinusoidal behaviour of the motor's voltages induced with exposed winding strands (2) (emf functional block 21), for the actual additional signal (Z) in the actual angular sector, input values for a pulse-width generator (22), which generates the output signals (A), so that their pulse width varies continuously according to the emf curve of this motor (1) dependent on rotor position.

2. A device according to Claim 1, **characterized in that**, for the actual rotor position indicated by sector signal (S) and additional signal (Z), the electronic control mechanism (7) sets a current angle through the winding strands (2), which is swivelled through 90° plus the actual phase shift between current and voltage in the winding strands (2) in relation to the actual rotor position, so that it is set by phase coincidence of the motor currents with the motor emf field-oriented operation.

3. A device according to Claim 1 or 2, **characterized in that** the electronic control mechanism (7) evaluates the actual current amplitude and, with the exceeding of a threshold value, limits the current amplitude and thus the torque.

4. A device according to one of the preceding claims, **characterized in that** a measuring element (20) detects the actual motor current and with an overcurrent switches off the motor via the electronic control mechanism (7).

5. A device according to one of the preceding claims, **characterized in that** a temperature sensor is provided, which detects a temperature corresponding to the motor current and with an overtemperature switches off the motor via the electronic control mechanism (7).

6. A device according to one of the preceding claims, **characterized in that**, for achieving high rotor speeds, the electronic control mechanism (7) adds a correction angle to the determined voltage angle in the motor vector diagram and thus sets a field-weakening reactive current.

7. A device according to one of the preceding claims, **characterized in that**, for braking the rotor (3) by specific setting of a reactive current, the electronic control mechanism (7) lowers the efficiency of the motor or generator, so as to be able to convert the kinetic energy specifically into motor heat.

8. A device according to one of the preceding claims, **characterized in that** the electronic control mechanism (7) is a microcontroller.

## Revendications

1. Dispositif de commande du courant d'entraînement, en particulier commande de la vitesse de rotation, d'un moteur synchrone à aimant permanent (1) commuté électriquement avec n lignes d'enroulement et n capteurs de commutation, en particulier des capteurs de Hall, pour la reconnaissance de l'angle de rotation du rotor (3) du moteur, une électronique de commande (7) détectant les signaux (H) des capteurs et provoquant des signaux de sortie (A) pour la commande de semiconducteurs de puissance, par lesquels les courants du moteur circulent à travers les lignes d'enroulement (2), **caractérisé en ce que** l'électronique de commande (7) détecte les flancs des signaux (H) des capteurs et détermine à partir de ceux-ci un signal de secteur (S) indiquant dans quel secteur d'angle de rotation se trouve momentanément le rotor (3), **en ce que** l'électronique de commande (7) estime en outre, à partir de la vitesse angulaire de rotation momentanée, un signal supplémentaire (Z) pour l'interpolation de la position précise du rotor dans le secteur d'angle de rotation momentané, et **en ce qu'**enfin l'électronique de commande (7) sélectionne dans un tableau de valeurs mémorisé pour ce moteur (1), relatif à l'allure sensiblement sinusoïdale de ses tensions induites pour des lignes d'enroulement (2) libres (bloc fonctionnel force électromotrice 21), pour le signal supplémentaire (Z) actuel dans le secteur actuel d'angle de rotation, des valeurs d'entrée pour un générateur de largeur d'impulsion (22), lequel provoque les signaux de sortie (A), ce qui fait que leur largeur d'impulsion varie en continu selon la courbe de la force électromotrice de ce moteur (1), en fonction de la position du rotor.

2. Dispositif selon la revendication 1, **caractérisé en ce que** l'électronique de commande (7) règle, pour la position actuelle du rotor, donnée par le signal de secteur (S) et le signal supplémentaire (Z), un angle de courant à travers les lignes d'enroulement (2), qui est pivoté de 90° augmenté du déphasage actuel entre le courant et la tension dans les lignes d'enroulement, par rapport à la position actuelle du rotor, de sorte que par une égalité des phases des courants du moteur et de la force électromotrice du moteur, il s'établit un fonctionnement qui tient compte du champ.

3. Dispositif selon la revendication 1 ou 2, **caractérisé en ce que** l'électronique de commande (7) estime l'amplitude respective du courant et, en cas de dépassement d'une valeur limite, limite l'amplitude du courant et donc le couple de rotation.

4. Dispositif selon l'une des revendications précédentes, **caractérisé en ce qu'**un organe de mesure (20) détecte le courant effectif du moteur et, en cas de surintensité, met le moteur à l'arrêt par l'intermédiaire de l'électronique de commande (7).

5. Dispositif selon l'une des revendications précédentes, **caractérisé en ce qu'**il est prévu une sonde de température qui détecte une température correspondant au courant du moteur et qui, en cas de surtempérature, met le moteur à l'arrêt, par l'intermédiaire de l'électronique de commande.

6. Dispositif selon l'une des revendications précédentes, **caractérisé en ce que** pour atteindre de grandes vitesses de rotation du rotor pour l'angle de tension déterminé dans le diagramme vectoriel du moteur, l'électronique de commande (7) additionne un angle de dérivation, et règle par là un courant déwatté qui affaiblit le champ.

7. Dispositif selon l'une des revendications précédentes, **caractérisé en ce que** pour le freinage du rotor (3) par réglage ciblé d'un courant déwatté, l'électronique de commande (7) abaisse le rendement du moteur ou du générateur, afin de pouvoir convertir l'énergie cinétique, de manière ciblée, en chaleur du moteur.

8. Dispositif selon l'une des revendications précédentes, **caractérisé en ce que** l'électronique de commande (7) est un micro-contrôleur.

Fig. 1

Fig. 2a

Fig. 2b

Fig. 2c

Fig. 2d

Fig. 2e

Fig. 3a

Fig. 3b

Fig. 4